# EUROPEAN PATENT APPLICATION

(11) **EP 3 051 431 A1**
(43) Date of publication of application: **03.08.2016**
(21) Application number: 13894407.9
(22) Date of filing: 05.12.2013
(51) Int. Cl.: G06F 17/30

(54) **KEYWORD EXPANSION METHOD AND SYSTEM, AND CLASSIFIED CORPUS ANNOTATION METHOD AND SYSTEM**

(30) Priority: 29.09.2013 CN 201310456381
(71) Applicant: Peking University Founder Group Co., Ltd, Beijing 100871 (CN); Founder Apabi Technology Limited, Beijing 100089 (CN); Peking University, Beijing 100871 (CN)
(72) Inventor: YE, Mao, Beijing 100089 (CN); TANG, Zhi, Beijing 100089 (CN); XU, Jianbo, Beijing 100089 (CN); LEI, Chao, Beijing 100089 (CN); JIN, Lifeng, Beijing 100089 (CN)
(74) Representative: Dantz, Jan Henning
(86) International application number: PCT/CN2013/088586
(87) International publication number: WO 2015/043066

(57) **Abstract**

This invention provides a keyword expansion method and system. The method comprises searching with a predetermined initial keyword to obtain current keywords used as a basis of a next search, performing loop search through keyword iteration; if a keyword error between keywords obtained in the current search and those keywords obtained in a previous search is less than a predetermined threshold, using the keywords obtained in the current search as expanded keywords of the initial keyword. With this method, the problem of manually establishing a thesaurus in the prior art may be solved. This method is a simple, accurate and efficient keyword expansion method. A method and system of automatically annotating a classified corpus is also provided. The method comprises: determining one or more initial core keywords for each class; obtaining expanded keywords for each class through expanding the initial core keywords; searching with the expanded keywords corresponding to a class to select a classified corpus and annotating the classified corpus.

## Description

### TECHNICAL FIELD

This invention relates a method of keyword expansion and a method of automatically annotating a classified corpus, which belongs to the field of electric digital data processing.

### DESCRIPTION OF THE RELATED ART

In general, keywords are words which may collectively represent some kind of related terms. In order to improve the comprehensiveness of matters covered by keywords, each keyword generally corresponds to several related meanings. In order to improve the hit rate of keywords-based retrieval, it is common to perform expansion on a specified initial keyword to obtain related words corresponding to the keyword, which are used for retrieval simultaneously. A method of keyword expansion is provided in the prior art, comprising at first establishing a database including keywords, terms, and identification codes; then corresponding each keyword to at least one term; corresponding related keywords to an identification code; according to a keyword entered by a user, determining an identification code corresponding to the keyword in the database; according to the identification code, extracting related keywords corresponding to the identification code; according to the related keywords, querying terms corresponding to each keyword. This scheme provides a search method with automatic keyword expansion, which is based on a per-established thesaurus. A poor-established thesaurus may seriously impact the accuracy of keyword expansion. Besides, establishing a thesaurus needs many artificial experiences and is subjective to some extent, thereby affecting the accuracy of classification.

Corpus annotation mainly involves recording classification feature information of a corpus, and is the main part of superficial analysis of the corpus. Corpus annotation may be applied to many fields, such as information retrieval, machine translation, subject matter analysis and text processing. The accuracy of corpus annotation has direct influence on the accuracy of text analysis and text processing.

In supervised text classification, for example text classification using SVM (Support Vector Machine), after a classification system is determined, an annotated corpus is prepared for each classification of the classification system to train a classification model. Classified corpus annotation is generally performed artificially, i.e., a person responsible for corpus annotation determines which class a corpus element belongs to according to his/her knowledge. However, for a large amount of corpus elements to be annotated, artificial corpus classification has the following problems:(1) high artificial cost; (2)a long period of artificial annotation; (3)subjective influence in artificial annotation, i.e., for the same corpus element, it may be classified into different classes by different people; (4)prone to error due to tedious annotation in the case of a large amount of corpus elements.

A corpus annotation system based on BP neural network is disclosed in the prior art, comprising corpus memory, annotated corpus buffering memory, a corpus annotation result comparator and a BP neural network processing unit. In annotation, the BP neural network processing unit annotates a corpus to be annotated in the corpus memory, and stores its annotation results in the annotated corpus buffering memory; the corpus annotation result comparator compares the results in the buffering memory. In the above technical solution, the BP neural network processing unit comprises at least two classification processers. In the processing of annotated results, only when at least two classification processers meet some comparison coefficient with respect to the annotation results of the corpus to be annotated against a specified criterion, annotation is performed on the corpus to be annotated and is stored in the corpus memory. This solution is based on a BP neural network algorithm. The algorithm is complex and computationally expensive, with a low rate of convergence, and is time-consumed when processing a large amount of corpus elements; further, at least two classification processors are required for the classification process, so that a lot of memory is occupied; meanwhile, to train the neural network, some large-scale annotated corpora must be prepared in advance, and this is costly, however.

### SUMMARY OF THE INVENTION

A technical problem to be solved in this invention is that keyword expansion in the prior art has stronger subjectivity, establishing a thesaurus needs a lot of work, and keyword expansion has low accuracy. A solution of keyword expansion is provided, which is objective, simple and convenient, and accurate.

Another problem to be solved in this invention is that the corpus annotation method adopted in the prior art is based on a BP neural network algorithm, which is complex and computationally expensive, with a low rate of convergence, and occupies a lot of memory; meanwhile, in corpus annotation, some large-scale annotated corpora must be prepared manually in advance to train the classification processors, however, preparing the annotated corpora is costly. It is desired to provide a machine-assisted method for automatically annotating a classified corpus.

To solve the above technical problems, this invention presents the following technical solutions.

A keyword expansion method, comprising: searching with a predetermined initial keyword to obtain current keywords; using the current keywords obtained through searching as a basis of a next search, performing loop search through keyword iteration; if a keyword error between keywords obtained in the current search and those keywords obtained in a previous search is less than a predetermined threshold, terminating the loop search process and using the keywords obtained in the current search as expanded keywords.

Optionally, the process of searching to obtain current keywords comprises: counting the occurrence number of each word obtained through searching, and taking words having occurrence numbers more than a predetermined threshold as current keywords obtained through searching.

Optionally, the process of searching to obtain current keywords comprises: counting the number of words obtained through searching and their occurrence numbers, sorting the words in descending order of their occurrence numbers and taking a proportion of top words as current keywords obtained through searching.

Optionally, the method of obtaining words obtained through searching comprises: searching with a predetermined keyword in an article repository to obtain articles having high relevance, performing word segmentation on these articles having high relevance, and using the result of word segmentation as the words obtained through searching.

Optionally, the keyword expansion method further comprises removing stop words after word segmentation, obtaining co-occurrence words that appear simultaneously with the predetermined keyword, and using these co-occurrence words as the words obtained through searching.

Optionally, in the keyword expansion method, the error between keywords obtained through a current search and keywords obtained in a previous search is a ratio of the number of keywords that are different between the current search and the previous search to the number of keywords obtained in the current search.

Optionally, in the keyword expansion method, the first n keywords are taken out from the keywords obtained in the current search and the keywords obtained through the previous search respectively for error evaluation, 5 ≤ n ≤ 10.

Optionally, in the keyword expansion method, the predetermined error threshold is less than 20%.

In the keyword expansion method, if keywords obtained in the current search are the same as keywords obtained through the previous search, the keywords obtained in the current search are determined as expanded keywords.

A method of annotating a classified corpus using the keyword expansion method described herein, comprising steps of:
determining one or more initial core keywords for each class; with the initial core keywords, obtaining expanded keywords for each class using the keyword expansion method described above; searching with the expanded keywords corresponding to a class to select a classified corpus and annotating the classified corpus.

A keyword expansion system comprising: an obtaining unit for searching with a predetermined initial keyword to obtain current keywords; a loop-search unit for using the current keywords obtained through searching as a basis of a next search, performing loop search through keyword iteration; a determining unit for determining whether a keyword error between keywords obtained in the current search and those keywords obtained in a previous search is less than a predetermined threshold; if so, indicating the loop-search unit to terminate the loop search process and using the keywords obtained in the current search as expanded keywords.

Optionally, the obtaining unit comprises a search word obtaining module for searching with a predetermined keyword in an article repository to obtain articles having high relevance, performing word segmentation on these articles having high relevance, and using the result of word segmentation as the words obtained through searching; a search keyword obtaining module for counting the occurrence number of each word obtained through searching respectively, and taking words having occurrence numbers more than a predetermined threshold as current keywords obtained through searching.

Optionally, the obtaining unit comprises a search word obtaining module for searching with a predetermined keyword in an article repository to obtain articles having high relevance, performing word segmentation on these articles having high relevance, and using the result of word segmentation as the words obtained through searching; a search keyword comparison module for a search keyword obtaining module for counting the number of words obtained through searching and their occurrence numbers, sorting the words in descending order of their occurrence numbers and taking a proportion of the top words as current keywords obtained through searching.

Optionally, in the keyword expansion system, the search word obtaining module searches with a predetermined keyword in an article repository to obtain articles having high relevance, performs word segmentation on these articles having high relevance, removes stop words after word segmentation, obtains co-occurrence words that appear simultaneously with the predetermined keyword, and uses these co-occurrence words as the words obtained through searching.

Optionally, in the keyword expansion system, the error between keywords obtained through a current search and the keywords obtained in a previous search is a ratio of the number of keywords that are different between the current search and the previous search to the number of keywords obtained in the current search.

Optionally, in the keyword expansion system, the first n keywords are taken out from the keywords obtained in the current search and keywords obtained through the previous search respectively for error evaluation, 5 ≤ n ≤ 10.

Optionally, in the keyword expansion system, the predetermined error threshold is less than 20%.

Optionally, in the keyword expansion system, if keywords obtained in the current search are the same as keywords obtained through the previous search, the keywords obtained in the current search are determined as expanded keywords.

A system of classified corpus annotation using the keyword expansion system, comprising a keyword determining unit for determining one or more initial core keywords for each class; a keyword expansion unit for, with the initial core keywords, obtaining expanded keywords for each class using the keyword expansion system described above; an annotation unit for searching with the expanded keywords corresponding to a class to select a classified corpus and annotating the classified corpus.

The above technical solutions of this disclosure have one or more of the following advantages over the prior art.
(1) in an embodiment of the keyword expansion method of this disclosure, through searching with a predetermined initial keyword to obtain keywords used as a basis of a next search, performing loop search through keyword iteration, if a keyword error between keywords obtained in the current search and those keywords obtained in a previous search is within a certain range, using the keywords obtained in the current search as expanded keywords of the initial keyword, this method may obtain multiple expressions of the initial keyword and its multiple meanings, realize effective and reasonable expansion of the initial keyword, and may solve the problem of manually establishing the thesaurus in the prior art. This keyword expansion method is advantageous in its convenient implementation and high accuracy.
(2) in this keyword expansion method, through counting the occurrence number of each word obtained through searching, taking words having occurrence numbers more than a predetermined threshold as keywords obtained through searching; or counting the number of words obtained through searching and their occurrence numbers, sorting the words in descending order of their occurrence numbers and taking a proportion of the top words as keywords obtained through searching. The keywords obtained have statistical significance, making it easier to discover those words associated with various meanings of the keyword.
(3) in this keyword expansion method, words are obtained through searching in an article repository to obtain articles having high relevance, performing word segmentation, removing stop words, and obtaining co-occurrence words. After various filtering steps, undesired words are removed and effective words may be obtained.
(4) in this keyword expansion method, the search process is terminated and expanded keywords are obtained when the keyword error between keywords obtained in the current search and keywords obtained in a previous search is within a certain range. Desired keywords are obtained through keyword iteration and convergence, so that processing speed is increased and operating efficiency is improved.
(5) in this keyword expansion method, when the keywords obtained in the current search are the same as the keywords obtained through the previous search, the keywords obtained in the current search are determined as the expanded keywords, and the accuracy of the expanded keywords is improved.
(6) this invention also provides a classified corpus annotation method, in which expanded keywords are used in a searching process to obtain a classified corpus, which may improve the efficiency and accuracy of classified corpus annotation. This classified corpus annotation method may effectively avoid the problem of the classified corpus annotation method based on a BP neural network algorithm in the art, i.e., the algorithm is complex and computationally expensive, with a low rate of convergence, and is time-consumed when processing a large amount of corpus elements; further, at least two classification processors are required for the classification process, so that a lot of memory is occupied; meanwhile, to train the neural network, some large-scale annotated corpora must be prepared in advance, and thus is costly.

### BRIEF DESCRIPTION OF THE DRAWINGS

For an easier and clear understanding of this invention, a further description of this invention will be given below with reference to the accompanying drawings, in which:
Fig.1 is a flowchart of the keyword expansion method according to an embodiment of this invention;
Fig.2 is a flowchart of the classified corpus annotation method according to an embodiment of this invention;
Fig.3 is a structural diagram of the keyword expansion system according to an embodiment of this invention;
Fig.4 is a structural diagram of the system of classified corpus annotation according to an embodiment of this invention.

### DETAILED DESCRIPTION OF THE PREFERRED EMBODIMENT

### Embodiment 1

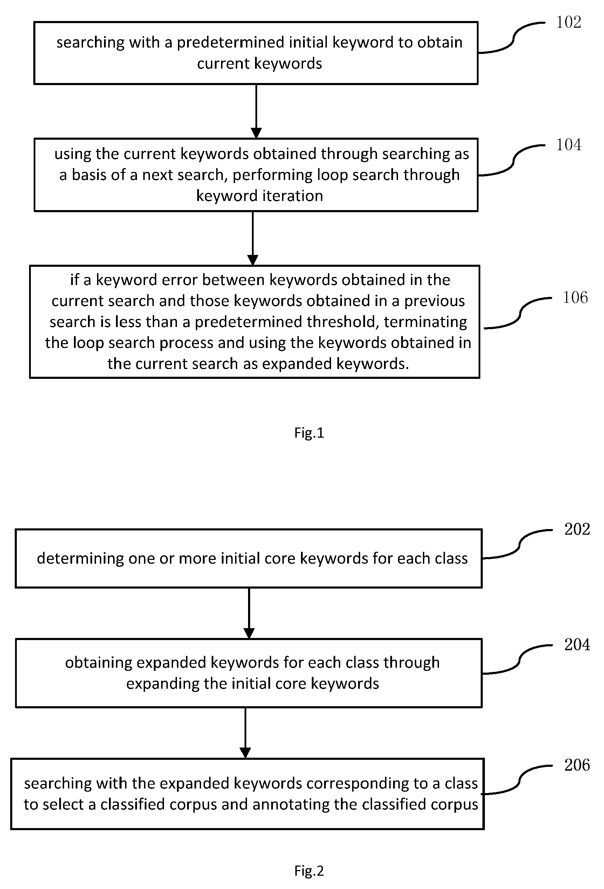

This embodiment provides a keyword expansion method, as shown in Fig.1, the method comprises the following steps.

Step 102: searching with a predetermined initial keyword to obtain current keywords. In this embodiment, a search is performed in an article repository with an initial keyword to obtain articles having high relevance. Then, word segmentation is performed on these articles having high relevance, and the result of word segmentation is used as the words obtained through searching. The occurrence number of each word is counted, and words having occurrence numbers more than a predetermined threshold of 50 are used as keywords obtained through searching (which is specified according to the size of the article repository and the popularity of the keyword). Keywords obtained in this manner has statistical significance, making it easier to discover those words associated with various meanings of the keywo rd.

Step 104: using the current keywords obtained through searching as a basis of a next search, performing loop search through keyword iteration. This search process is similar to the particular process of step 102. In this step, search is performed using keywords obtained in a previous search as keywords used in this search process. Keywords obtained through searching are in turn used as keywords used in a next search process. In this way, search is performed through keyword iteration.

Step 106: after each search, if keyword error between keywords obtained in the current search and those keywords obtained in a previous search is less than a predetermined threshold, terminating the loop search process and using the keywords obtained in the current search as expanded keywords. For example, keywords obtained in the current search are compared with those keywords obtained in the previous search, if identical, the keywords obtained in the current search are used as the expanded keywords. In this way, the accuracy of the expanded keywords may be improved.

In the keyword expansion method according to the above embodiment, through searching with a predetermined initial keyword to obtain keywords used as a basis of a next search, performing loop search through keyword iteration, if a keyword error between keywords obtained in the current search and those keywords obtained in a previous search is within a certain range, using the keywords obtained in the current search as expanded keywords of the initial keyword, this method may obtain multiple expressions of the initial keyword and its multiple meanings, realize effective and reasonable expansion of the initial keyword, and may solve the problem of manually establishing the thesaurus in the prior art. This keyword expansion method is advantageous in its convenient implementation and high accuracy.

As another alternative embodiment, keywords obtained in the current search may be compared with those keywords obtained in the previous search; if a ratio of different keywords to the total keywords is less than a predetermined threshold, such as 20%, keywords obtained in the current search are determined as the expanded keywords.

### Embodiment 2

(1) searching with a predetermined initial keyword to obtain current keywords.
(2) using the current keywords obtained through searching as a basis of a next search, performing loop search through keyword iteration.

In the search process of steps (1) and (2), the search method is as follows:
searching in an article repository with a predetermined keyword to obtain articles having high relevance; then, performing word segmentation these articles having high relevance; removing stop words after word segmentation; obtaining co-occurrence words that appear simultaneously with the predetermined keyword, and using these co-occurrence words as the words obtained through searching, wherein the co-occurrence words may be obtained using a sliding window method.

In the above embodiment, words are obtained through word segmentation, removing stop words, and obtaining co-occurrence words. After various filtering steps, undesired words are removed and effective words may be obtained.
counting the number of words obtained through searching and their occurrence numbers, sorting the words in descending order of their occurrence numbers and taking a proportion such as 50% of the top words (herein, the proportion may be specified as needed) as keywords obtained through searching. For example, if 100 words are obtained through searching, 20% of the top words appear frequently are taken as keywords obtained through searching.

Herein, as another alternative embodiment, the occurrence numbers may be normalized in advance. The method of normalization comprises: for various words obtained through searching, calculating the sum of their occurrence numbers; for each word, using the value of the occurrence number of this word/sum as its normalized value; sorting the normalized values in descending order and taking a proportion of words having top values as keywords obtained through searching.

In this process, the error between keywords obtained in the current search and keywords obtained in the previous search is defined as a ratio of the number of keywords that are different between the current search and the previous search to the number of keywords obtained in the current search. When the error is less than 10%, the search process is terminated and the keywords obtained in the current search are used as the expanded keywords.

As another alternative embodiment, the error may be calculated from the first n keywords, for example, from the first 5 or 10 keywords. When the error is less than 20%, search process is terminated and the expanded keywords are obtained.

The search process is terminated and expanded keywords are obtained when the keyword error between keywords obtained in the current search and keywords obtained in the previous search is within a certain range. Desired keywords are obtained through keyword iteration and convergence, so that processing speed is increased and operating efficiency is improved.

### Embodiment 3

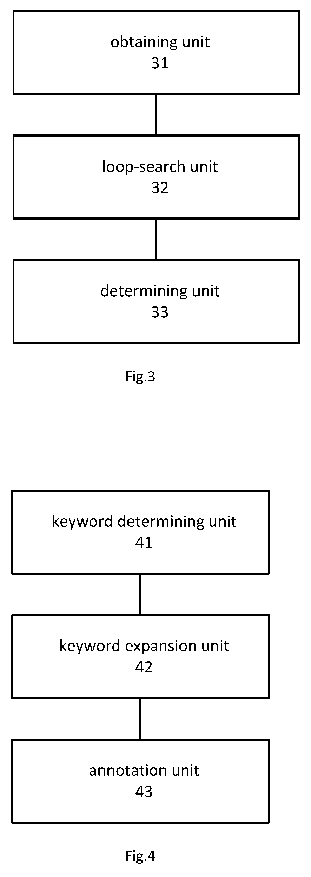

Fig.3 is a structural diagram of the keyword expansion system according to an embodiment of this invention. As shown in Fig.3, the keyword expansion system comprises:
(1) an obtaining unit 31 for searching with a predetermined initial keyword to obtain current keywords. in an embodiment, the obtaining unit comprises a search word obtaining module for searching with a predetermined keyword in an article repository to obtain articles having high relevance, performing word segmentation on these articles having high relevance, and using the result of word segmentation as the words obtained through searching; a search keyword obtaining module for counting the occurrence number of each word obtained through searching respectively, and taking words having occurrence numbers more than a predetermined threshold as current keywords obtained through searching.
   As an alternative embodiment, the obtaining unit comprises a search word obtaining module for searching with a predetermined keyword in an article repository to obtain articles having high relevance, performing word segmentation on these articles having high relevance, and using the result of word segmentation as the words obtained through searching; a search keyword comparison module for a search keyword obtaining module for counting the number of words obtained through searching and their occurrence numbers, sorting the words in descending order of their occurrence numbers and taking a proportion of the top words as current keywords obtained through searching.
(2) a loop-search unit 32 for using the current keywords obtained through searching as a basis of a next search, performing loop search through keyword iteration.
   The search process described above comprises: searching with a predetermined keyword in an article repository to obtain articles having high relevance, performing word segmentation on these articles having high relevance, and using the result of word segmentation as the words obtained through searching. In the keyword expansion system, stop words are further removed after word segmentation, and co-occurrence words that appear simultaneously with the predetermined keyword are obtained and are used as the words obtained through searching. The search word obtaining module or the search keyword comparison module performs a statistic on the words obtained through searching to obtain the keywords obtained through searching.
(3) a determining unit 33 for determining whether a keyword error between keywords obtained in the current search and those keywords obtained in a previous search is less than a predetermined threshold, such as 10%; if so, indicating the loop-search unit to terminate the loop search process and using the keywords obtained in the current search as expanded keywords. The error between keywords obtained through the current search and keywords obtained in the previous search is a ratio of the number of keywords that are different between the current search and the previous search to the number of keywords obtained in the current search. As an alternative embodiment, an error evaluation may be performed using the first n keywords, for example, 5 ≤ n ≤ 10.

As an alternative embodiment, in order to improve search accuracy, keywords obtained in the current search are determined as the expanded keywords only if the keywords obtained in the current search are the same as those keywords obtained through the previous search.

### Embodiment 4

A particular application example is given below.

A search is performed with an initial keyword "cup". An article repository (500 articles) is searched with the word "cup", and a sequence of keywords "water", "kettle", "teacup", "water dispenser", "drink" are obtained with the search method and the method of obtaining keywords described above.

A search is performed again with the sequence of words obtained above and a sequence of keywords "water", "teacup", "kettle", "thermos bottle", "bucket" are obtained.

An error of 40% is determined through comparing the two search results above. Thereby, a search is further performed with the above search result as keywords, and a result "water", "teacup", "cup", "water glass", "kettle" is obtained.

An error of 40% is determined through comparing this search result and the previous search result, which does not satisfy the threshold of 20% and the search process continues with the above keywords to obtain a search result "water", "teacup", "cup", "water glass", "kettle".

An error less than 20% is determined through comparing this search result and the previous search result, which satisfies the requirement of the threshold value and thus the search process is terminated. The result of the current search "water", "teacup", "cup", "water glass", "kettle" is used as keywords after the expansion of the keyword "cup".

### Embodiment 5

This embodiment provides a method of classified corpus annotation using the keyword expansion method, as shown in the flowchart of Fig.2, comprising the following steps:
Step 202: determining one or more initial core keywords for each class;
Step 204: with the initial core keywords, obtaining expanded keywords for each class using the keyword expansion method described above;
Step 206: searching with the expanded keywords corresponding to a class to select a classified corpus and annotating the classified corpus.

### Embodiment 6

Fig.4 is a structural diagram of the system of classified corpus annotation according to an embodiment of this invention. As shown in Fig.4, the system of classified corpus annotation using a keyword expansion system comprises:
a keyword determining unit 41 for determining one or more initial core keywords for each class;
a keyword expansion unit 42 for, with the initial core keywords, obtaining expanded keywords for each class using the keyword expansion system, comprising:
   an obtaining subunit for searching with the predetermined initial core keywords to obtain current keywords;
   a loop-search subunit for using the current keywords obtained through searching as a basis of a next search and performing loop search through keyword iteration;
   a determining subunit for determining whether a keyword error between keywords obtained in the current search and those keywords obtained in a previous search is less than a predetermined threshold; if so, indicating the loop-search unit to terminate the loop search process and using the keywords obtained in the current search as expanded keywords.
   an annotation unit 43 for searching with the expanded keywords corresponding to a class to select a classified corpus and annotating the classified corpus.

### Embodiment 7

A method of classified corpus annotation using the keyword expansion method will be illustrated with reference to an application example.
S1: determining one or more initial core keywords for each class;
   Given that there are three classes {military, economy, sport} in a classification system. One or more initial core keywords are determined manually for each class. Taking "military" as an example, keywords {war, refugee, casualty} are determined as initial core keywords. a full text repository is established with articles selected from a newspapers and periodicals database.
S2: obtaining expanded keywords of each class through expanding the initial core keywords.

In step S2, expanded keywords of each class are obtained through searching iteratively, which comprises the following steps:
S21: with initial core keywords of a class, obtaining candidate expanded keywords of this class through searching.
S210: selecting initial core keywords {war, refugee, casualty} of the class "military";
S211: making a search with the initial core keywords {war, refugee, casualty} and obtaining first 1000 articles according to their relevance.
   In other embodiment, the number of articles is n, wherein n ≥ 2, n is an integer. The value of n is in a range of 30 ≤ n ≤ 2000. The value of n may be selected from 50, 100, 500, 700, 1200, 1700, 2000 and other different values, and may be selected according to a user's demand and class characteristics.
S212: performing word segmentation on the 1000 articles of the class "military" and removing stop words.
   In this embodiment, a NLPIR tokenizer is used to perform word segmentation on the n articles and remove stop words. Stop words may be filtered out using a dictionary of stop words after word segmentation. The NLPIR tokenizer used has functions of Chinese word segmentation, POS tagging, entity identification, user dictionary, microblog word segmentation, new word mining and keyword extraction, and supports GBK, UTF8, BIG5 encoding formats. This tokenizer has complete functions, fast computing speed and high reliability.
   In another embodiment, a CJK tokenizer or an IK tokenizer may be used for performing word segmentation on the n articles and removing stop words. Stop words may be filtered out using a dictionary of stop words after word segmentation. For a Chinese text repository, the CJK tokenizer dedicated to processing Chinese text documents may be used, which has fast computing speed and is stable and reliable. The IK tokenizer is also suitable. Stop words may be filtered out using a stop word dictionary after word segmentation, or stop words are filtered out through configuring a stop word dictionary of the IK tokenizer. Full segmentation in forward and backward directions and maximum match segmentation in forward and backward directions may be realized based on a dictionary-based segmentation. This tokenizer optimizes the storage of the dictionary, consuming less memory, having fast computing speed and high reliability.
S213: using a sliding window method, obtaining words in a sliding window having a size of 7 around a keyword as candidate expanded keywords. Three words before the core keyword and three words after the core keyword and the core keyword itself are used as the candidate expanded keywords. In the case of less than three words before or after the core keyword, all words before or after the core keyword are selected.

In another embodiment, six words before the core keyword and the core keyword itself may be used as the candidate expanded keywords; or four words before the core keyword, two words after the core keyword and the core keyword itself may be used as the candidate expanded keywords; or two words before the core keyword, four words after the core keyword and the core keyword itself may be used as the candidate expanded keywords. If there are not enough words before or after the core keyword, all words before or after the core keyword may be selected.

As an alternative embodiment, the sliding window has a size S, wherein S ≥ 2, S is an integer. The size S of the sliding window has a value of 3 ≤ S ≤ 10. The value of the sliding window may be selected from 4, 5, 6, 8, 9, 10 and other different values, or may be selected according to a user's demand.

In the method of automatically annotating a classified corpus of this invention, keywords are obtained using a sliding window method. This method may control the maximum number of acceptable words through limiting the size of the window. This algorithm is simple, having fast computing speed and high accuracy.
S22: searching with the candidate expanded keywords obtained each time to obtain new core keywords until no change occurs in the candidate expanded keywords, and storing them as a set of keywords.
   S221: counting the occurrence numbers of the candidate expanded keywords and sorting the candidate expanded keywords in descending order of their occurrence numbers.
   S222: selecting first 10 candidate expanded keywords as new core keywords.
      In other embodiment, the first m candidate expanded keywords are selected as new core keywords, wherein m ≥ 2, m is an integer, the value of m is in a range of 5 ≤ m ≤ 30, the value of m may be selected from 5, 7, 13, 17, 25, 27, 30 and other different values, and may be selected according to a user's demand and class characteristics.
   S223: returning to step S211 and searching with the new core keywords until the new core keywords do not change and converge on a specific set of keywords.
      Ten keywords obtained through expanding the initial core keywords of the class "military" are expanded keywords {refugee, Iraq, war, Africa, home, forced to, Afghanistan, Jordan, clash, resettlement} obtained in an iterative manner based on the initial core keywords.
S23: checking the set of keywords and removing keywords not in conformity with the characteristic of a class to obtain expanded keywords of this class.

Assume that a user is making a research on military issues, keywords {home, resettlement} that are not in conformity with the characteristic of the class "military" may be removed.

Through checking the set of keywords, some keywords that are not in conformity with the characteristic of a class may be removed, making the expanded keywords obtained more accurate.
S3: searching with expanded keywords corresponding to a class to select a classified corpus and perform annotation, comprising the following steps:
   S31: searching in the full text repository with the expanded keywords {refugee, Iraq, war, Africa, forced to, Afghanistan, Jordan, clash} and sorting in descending order of relevance.
   S32: checking the first 1000 articles and selecting a classified corpus and annotating it as "military".

In other embodiment, first K articles may be selected for checking, wherein K ≥ 10, K is an integer, the value of K is in a range of 100 ≤ m ≤ 2000, the value of K may be selected from 1500, 1700, 2000 and other different values, and may be selected according to class characteristics.

In the checking of the first K articles, some articles that are not in conformity with a class characteristic may be removed to annotate other remaining article in conformity with the class characteristic as a corpus of this class.

In the method of automatically annotating a classified corpus of this invention, through limiting the number of articles obtained in each search to reduce the number of articles to be processed, processing speed may be increased; meanwhile, articles having lower relevance may be filtered out, making new core keywords obtained more accurate.

In the method of automatically annotating a classified corpus of this invention, each search is full text search in which matching is performed in full text, resulting in a high recall ratio and making the annotated corpus more accurate.

In the method of automatically annotating a classified corpus of this invention, through checking the corpus obtained through searching with the expanded keywords to remove some articles that are not in conformity with the characteristic of a class and annotate the remaining articles as a corpus of the class, the annotation of the corpus is more accurate.

### Embodiment 8

This embodiment provides another particular embodiment of the method of annotating a classified corpus.
Step 1: given three classes {military, economy, sport} in a classification system, manually determining one or more initial core keywords for each class. Taking "military" as an example, keywords {war, refugee, casualty} are determined as initial core keywords. A full text repository is established with articles selected from a newspapers and periodicals database.
Step 2: for the class "military", obtaining the first 1000 articles through full text searching with the initial core keywords {war, refugee, casualty}.
Step 3: performing word segmentation on the 1000 articles obtained and removing stop words.
Step 4: obtaining keywords around a keyword in a siding window having a size of 6 using a sliding window method.
Step 5: counting occurrence numbers of keywords and sorting keywords in descending order of their occurrence numbers.
Step 6: from the keywords obtained in step 5, selecting first 10 keywords as new core keywords.
Step 7: repeating steps 2 to 6, until no change occurs in the first 10 keywords, i.e., the first 10 keywords converge on a set of specific keywords. The ten keywords obtained are expanded keywords {refugee, Iraq, war, Africa, home, forced to, Afghanistan, Jordan, clash, resettlement} obtained in an iterative manner based on the initial core keywords.
Step 8: manually checking the expanded keywords to remove keywords {home, resettlement} that are not in conformity with the characteristic of the class.
Step 9: searching in the full text repository with the expanded keywords {refugee, Iraq, war, Africa, forced to, Afghanistan, Jordan, clash} corresponding to this class to obtain first 1000 articles, which forms a candidate corpus of this class.
Step 10: checking these 1000 articles manually to select a corpus of this class.
Step 11: for all classes, repeating steps 2 to 10 to obtain an annotated corpus for each class in the classification system.

Obviously, the above embodiments are merely examples given for clear description, but not limitations of this invention. For those skilled in the art, other modifications or variations may be made based on the above description, which will not be and cannot be listed exhaustively herein. These apparent modifications or variations derived are still within the protection scope of this invention.

This invention further provides one or more computer readable mediums having stored thereon computer-executable instructions that when executed by a computer perform a keyword expansion method, the method comprising: searching with a predetermined initial keyword to obtain current keywords; using the current keywords obtained through searching as a basis of a next search, performing loop search through keyword iteration; if a keyword error between keywords obtained in the current search and those keywords obtained in a previous search is less than a predetermined threshold, terminating the loop search process and using the keywords obtained in the current search as expanded keywords.

This invention further provides one or more computer readable mediums having stored thereon computer-executable instructions that when executed by a computer perform a method of annotating a classified corpus described above.

Those skilled in the art should understand that the embodiments of this application can be provided as method, system or products of computer programs. Therefore, this application can use the forms of entirely hardware embodiment, entirely software embodiment, or embodiment combining software and hardware. Moreover, this application can use the form of the product of computer programs to be carried out on one or multiple storage media (including but not limit to disk memory, CD-ROM, optical memory etc.) comprising programming codes that can be executed by computers.

This application is described with reference to the method, equipment (system) and the flow charts and/or block diagrams of computer program products according to the embodiments of the present invention. It should be understood that each flow and/or block in the flowchart and/or block diagrams as well as the combination of the flow and/or block in the flowchart and/or block diagram can be achieved through computer program commands Such computer program commands can be provided to general computers, special-purpose computers, embedded processors or any other processors of programmable data processing equipment so as to generate a machine, so that a device for realizing one or multiple flows in the flow diagram and/or the functions specified in one block or multiple blocks of the block diagram is generated by the commands to be executed by computers or any other processors of the programmable data processing equipment.

Such computer program commands can also be stored in readable memory of computers which can lead computers or other programmable data processing equipment to working in a specific style so that the commands stored in the readable memory of computers generate the product of command device; such command device can achieve one or multiple flows in the flowchart and/or the functions specified in one or multiple blocks of the block diagram.

Such computer program commands can also be loaded on computers or other programmable data processing equipment so as to carry out a series of operation steps on computers or other programmable equipment to generate the process to be achieved by computers, so that the commands to be executed by computers or other programmable equipment achieve the one or multiple flows in the flowchart and/or the functions specified in one block or multiple blocks of the block diagram.

Although preferred embodiments of this application are already described, once those skilled in the art understand basic creative concept, they can make additional modification and alteration for these embodiments. Therefore, the appended claims are intended to be interpreted as encompassing preferred embodiments and all the modifications and alterations within the scope of this application.

## Claims

1. A keyword expansion method, **characterized in** comprising:
searching with a predetermined initial keyword to obtain current keywords;
using the current keywords obtained through searching as a basis of a next search, performing loop search through keyword iteration;
if a keyword error between keywords obtained in the current search and those keywords obtained in a previous search is less than a predetermined threshold, terminating the loop search process and using the keywords obtained in the current search as expanded keywords.

2. The keyword expansion method according to claim 1, **characterized in that** the process of searching to obtain current keywords comprises: counting the occurrence number of each word obtained through searching, and taking words having occurrence numbers more than a predetermined threshold as current keywords obtained through searching.

3. The keyword expansion method according to claim 1, **characterized in that** the process of searching to obtain current keywords comprises: counting the number of words obtained through searching and their occurrence numbers, sorting the words in descending order of their occurrence numbers and taking a proportion of top words as current keywords obtained through searching.

4. The keyword expansion method according to claim 2 or claim 3, **characterized in that** the method of obtaining words obtained through searching comprises:
searching with a predetermined keyword in an article repository to obtain articles having high relevance, performing word segmentation on the articles having high relevance, and using the result of word segmentation as the words obtained through searching.

5. The keyword expansion method according to claim 4, **characterized in that** the keyword expansion method further comprises removing stop words after word segmentation, obtaining co-occurrence words that appear simultaneously with the predetermined keyword, and using these co-occurrence words as the words obtained through searching.

6. The keyword expansion method according to any of claims 1 to 5, **characterized in that** the keyword error between keywords obtained through a current search and keywords obtained in a previous search is a ratio of the number of keywords that are different between the current search and the previous search to the number of keywords obtained in the current search.

7. The keyword expansion method according to claim 6, **characterized in that** the first n keywords are taken out from the keywords obtained in the current search and keywords obtained through the previous search respectively for error evaluation, 5 ≤ n ≤ 10.

8. The keyword expansion method according to claim 1, **characterized in that** the predetermined error threshold is less than 20%.

9. The keyword expansion method according to claim 1, **characterized in that** if keywords obtained in the current search are the same as keywords obtained through the previous search, the keywords obtained in the current search are determined as expanded keywords.

10. A method of annotating a classified corpus, **characterized in** comprising steps of:
determining one or more initial core keywords for each class;
with the initial core keywords, obtaining expanded keywords for each class using the keyword expansion method of any of claims 1 to 9;
searching with the expanded keywords corresponding to a class to select a classified corpus and annotating the classified corpus.

11. A keyword expansion system, **characterized in** comprising:
an obtaining unit for searching with a predetermined initial keyword to obtain current keywords;
a loop-search unit for using the current keywords obtained through searching as a basis of a next search, performing loop search through keyword iteration;
a determining unit for determining whether a keyword error between keywords obtained in the current search and those keywords obtained in a previous search is less than a predetermined threshold; if so, indicating the loop-search unit to terminate the loop search process and using the keywords obtained in the current search as expanded keywords.

12. The keyword expansion system according to claim 11, **characterized in that** the obtaining unit comprises:
a search word obtaining module for searching with a predetermined keyword in an article repository to obtain articles having high relevance, performing word segmentation on these articles having high relevance, and using the result of word segmentation as the words obtained through searching;
a search keyword obtaining module for counting the occurrence number of each word obtained through searching respectively, and taking words having occurrence numbers more than a predetermined threshold as current keywords obtained through searching.

13. The keyword expansion system according to claim 11, **characterized in that** the obtaining unit comprises:
a search word obtaining module for searching with a predetermined keyword in an article repository to obtain articles having high relevance, performing word segmentation on these articles having high relevance, and using the result of word segmentation as the words obtained through searching;
a search keyword comparison module for a search keyword obtaining module for counting the number of words obtained through searching and their occurrence numbers, sorting the words in descending order of their occurrence numbers and taking a proportion of the top words as current keywords obtained through searching.

14. The keyword expansion system according to claim 12 or claim 13, **characterized in that** the search word obtaining module searches with a predetermined keyword in an article repository to obtain articles having high relevance, performs word segmentation on these articles having high relevance, removes stop words after word segmentation, obtains co-occurrence words that appear simultaneously with the predetermined keyword, and uses these co-occurrence words as the words obtained through searching.

15. The keyword expansion system according to any of claims 11 to 14, **characterized in that** the keyword error between keywords obtained through a current search and keywords obtained in a previous search is a ratio of the number of keywords that are different between the current search and the previous search to the number of keywords obtained in the current search.

16. The keyword expansion system according to claim 15, **characterized in that** the first n keywords are taken out from the keywords obtained in the current search and the keywords obtained through the previous search respectively for error evaluation, 5 ≤ n ≤ 10.

17. The keyword expansion system according to any of claims 11 to 16, **characterized in that** the predetermined error threshold is less than 20%.

18. The keyword expansion system according to any of claims 11 to 17, **characterized in that** if keywords obtained in the current search are the same as keywords obtained through the previous search, the keywords obtained in the current search are determined as expanded keywords.

19. A system of classified corpus annotation, **characterized in** comprising:
a keyword determining unit for determining one or more initial core keywords for each class;
a keyword expansion unit for, with the initial core keywords, obtaining expanded keywords for each class using the keyword expansion system according to any of claims 11 to 18;
an annotation unit for searching with the expanded keywords corresponding to a class to select a classified corpus and annotating the classified corpus.

20. One or more computer readable mediums having stored thereon computer-executable instructions that when executed by a computer perform a keyword expansion method, the method comprising:
searching with a predetermined initial keyword to obtain current keywords;
using the current keywords obtained through searching as a basis of a next search, performing loop search through keyword iteration;
if a keyword error between keywords obtained in the current search and those keywords obtained in a previous search is less than a predetermined threshold, terminating the loop search process and using the keywords obtained in the current search as expanded keywords.
